# EUROPEAN PATENT APPLICATION

(11) **EP 2 017 699 A2**
(43) Date of publication of application: **21.01.2009**
(21) Application number: 07254888.6
(22) Date of filing: 17.12.2007
(51) Int. Cl.: G06F 3/033

(54) **Wireless mouse capable of controlling a handheld wireless communication apparatus**

(30) Priority: 16.07.2007 TW 96211548 U
(71) Applicant: Hsu, Wei, Hsien (TW)
(72) Inventor: Hsu, Wei, Hsien (TW)
(74) Representative: Walker, Edmund Mortimer

(57) **Abstract**

A mouse for controlling the operation of a handheld wireless communication apparatus (2) is disclosed having on the outside thereof, in addition to the basic left button (101), right button (102) and roller/button (103), a reset button (11), a power switch (12), a joystick button (13), a mode selector switch (14) and a quick launch button (15), and on the inside thereof a 2.4GHz wireless transmission module (16) and a program-controlled microprocessor (17) so that the wireless mouse (1) can be moved by the user on a support surface or operated with the fingers through the joystick button (13) after separation of the wireless mouse (1) from the support surface to shift or change picture frames on the screen of the controlled handheld wireless communication apparatus (2) by means of a radio frequency control.

## Description

The present invention relates to a wireless mouse and more particularly, to a wireless mouse that can control the operation of a handheld wireless communication apparatus.

Wireless communication apparatus are numerous, including wireless telephone, walkie-talkie, police radio, ham radio, intercom, cell phone, etc. Nowadays, cell phone is the most popular wireless communication apparatus, and 3G (third generation mobile communication) technology is the market trend. It has been popular to connect a cell phone to the Internet for playing video games. However, because a cell phone has a small size, the display panel is small, and the tiny operating keys are inconvenient to control. It is quite inconvenient to shift the control of the operating keys of a cell phone when playing a video game.

Further, a mouse is a requisite peripheral apparatus for a notebook computer or personal computer. When carrying a notebook computer outdoors, a mouse generally will be carried with the notebook computer for operation control. It is to gain two advantages by one move if a mouse can be used to control a cell phone.

Commercial cell phones commonly use 800∼2000MHz for transmission. The advantage of 2.4GHz wireless high-frequency radio wave transmission function is to transmit data wirelessly within the range of 100M. Commercial cell phones and mice from different manufacturers use different jacks for the connection of different cables. The use of wireless communication technology for data transmission among different communication apparatus eliminates the drawback of cable connection. It brings great convenience to users.

Regular cell phones and peripheral apparatus with a 2.4GHz wireless high-frequency radio wave transmission function simply emphasize the function of data file transmission, such as the transmission of graphic files, music files, data files from a cell phone to a peripheral apparatus, such as wireless earphones, wireless printer, wireless notebook computer, etc.

There are no any commercial wireless keyboard or wireless mouse capable of controlling the operation of a cell phone. Because new generation cell phones have a strong function close to personal computer, the screen control of cell phones will soon be same as the screen control of personal computers by a mouse. In consequence, the video game control of a cell phone will soon be run through a mouse.

The inventor has involved oneself in the fabrication of PC (personal computer) game peripheral apparatus, and established a computer to develop PC game software and cell phone application software. Based on the knowledge of game operation control, the inventor acknowledged that it is the most convenient way and the best choice to control a video game on a cell phone through a mouse. Through teamwork in research and development, the inventor finally created the present invention.

The present invention has been accomplished under the circumstances in view. According to an aspect of the present invention, there is provided a wireless mouse capable of controlling the operation of a handheld wireless communication apparatus, which can be moved on a support surface in all directions by the user or operated with the fingers through a joystick button after separation of the wireless mouse from the support surface, so that when the wireless mouse changes the operation status, a corresponding format of radio frequency is sent out wirelessly to the controlled handheld wireless communication apparatus within the visible range relative to the user to intendedly change the display content on the screen of the controlled handheld wireless communication apparatus.

According to another aspect of the present invention, there is provided a wireless mouse comprising on the outside thereof:
a left button for giving an execution command to the content of the display screen and a right button for inquiry of content of object;
a roller/button for quick change of picture frames of the controlled wireless communication apparatus;
a reset button for re-setting connection between the wireless mouse and the handheld wireless communication apparatus;
a power switch for turning on/off the wireless mouse;
a joystick button for triggering the wireless mouse to emit different directional signals;
a mode selector switch for enabling the wireless mouse to be compatible to different operating systems;
a quick launch button for execution of the selected option or weapon triggering control during playing of a video game; and
a light emitting diode within the range of visible spectrum and an image-focusing optical device (a laser transmitter may be used to substitute for the light emitting diode in case a laser mouse is desired); and
on the inside thereof:
   a 2.4GHz wireless transmission module;
   a microprocessor electrically coupled to the left button, the right button, the roller/button, the optical induction module, the light emitting device, the power management circuit and the battery set;
   an optical induction module within the range of visible spectrum for picking up images focused by said image-focusing optical device for comparison with a predetermined reference image data in a control chip (the microprocessor described in the detailed description of the preferred embodiment) to provide an output indicative of the direction and amount of movement of the wireless mouse; and
   a power management circuit and a battery set for enabling the circuit to work under a stable and power-saving environment.

Based on the aforesaid composition, the communication between the wireless mouse and the controlled handheld wireless apparatus is done through transmitting and receiving of a radio frequency of a specific serial format radio wave carrying an ID (identification) code, and therefore the user can control the operation of the controlled handheld wireless communication apparatus with the visible range to intendedly change the display content of the controlled handheld wireless communication apparatus.
FIG. 1 is a perspective view of a wireless mouse in accordance with an embodiment of the present invention.
FIG. 1A is an enlarged view of the front part of the wireless mouse shown in FIG. 1.
FIG. 2 is a circuit block diagram of the wireless mouse in accordance with the embodiment of FIG. 1.
FIG. 3 is a schematic drawing showing an application example of the wireless mouse according to the embodiment of FIG. 1.

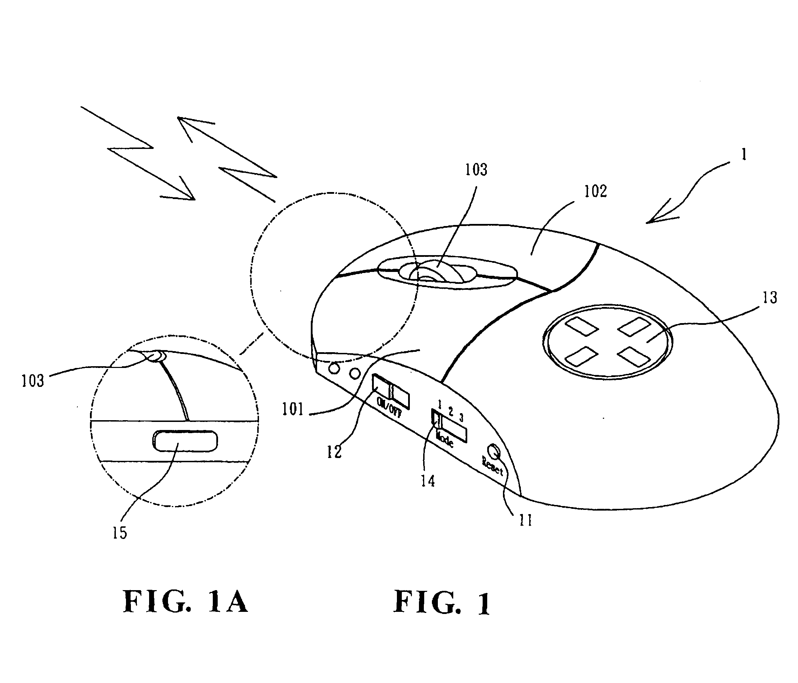

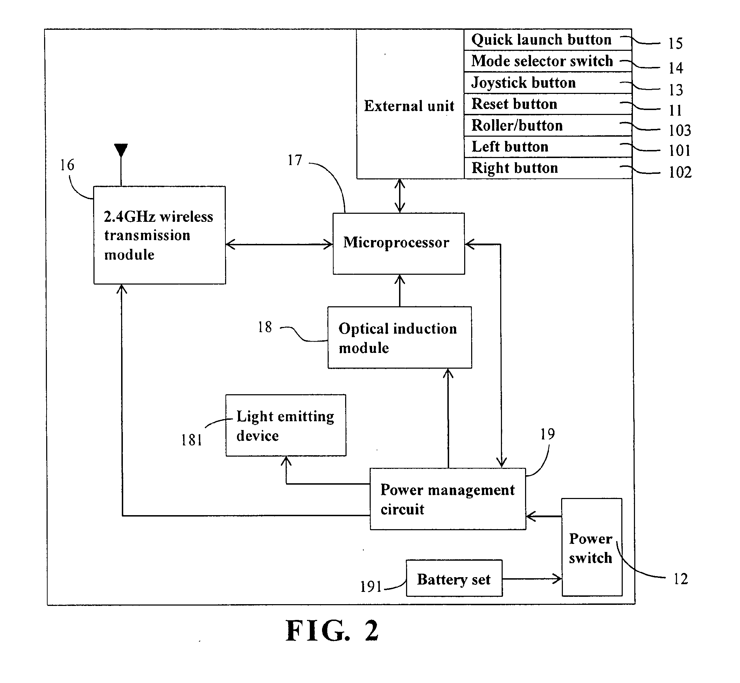

Referring to FIG. 1, a wireless mouse 1 in accordance with an embodiment of the present invention is shown comprising an external unit and an internal unit. The external unit comprises:
a human-factor engineered left button 101 and a human-factor engineered right button 102 respectively electrically connected to a microprocessor 17 (see also FIG. 2);
a roller/button 103 electrically connected to the microprocessor 17 for quick change of picture frames on the display screen of the controlled wireless communication apparatus;
a reset button I 1 electrically connected to the microprocessor 17 for reboosting connection between the wireless mouse 1 and the handheld wireless communication apparatus 2; the reset button 11 being an optional device;
a power switch 12 electrically connected to the microprocessor 17 through a power management circuit 19 for turning on/off the wireless mouse 1; the power switch 12 being an optional device;
a joystick button 13 electrically connected to the microprocessor 17 for triggering the wireless mouse 1 to emit different directional signals; the joystick button 13 being an optional device;
a mode selector switch 14 electrically connected to the microprocessor 17 for enabling the wireless mouse 1 to be compatible to different operating systems; the mode selector switch 14 being an optional device;
a quick launch button 15 arranged on the middle of the front side of the wireless mouse 1 (see FIG. 1A) and electrically connected to the microprocessor 17 for execution of the selected option or weapon triggering control during playing of a video game like the function of the left button 101; the quick launch button 15 being an optional device; and
an image-focusing optical device (not shown) arranged on the bottom side of the wireless mouse 1.

Referring to FIG. 2 again, the wireless mouse 1 has mounted therein a multilayer printed circuit board carrying component parts of different electrical functions. The multilayer printed circuit board comprises:
a 2.4GHz wireless transmission module 16 containing a match password for two-way communication to prevent eavesdropping and a data-encoded specific serial format radio wave;
the aforesaid microprocessor 17, which is a program-controlled microprocessor electrically connected to every component part of the wireless mouse for whole signal control;
an optical induction module 18 and a light emitting device (for example, red light emitting diode) 181 within the range of visible spectrum respectively electrically connected to the microprocessor 17; and
the aforesaid power management circuit 19 and a battery set 191 electrically connected to the microprocessor 17 for enabling the circuit to work under a stable and power-saving status.

By means of the composition of the aforesaid external unit and an internal unit, a wireless mouse capable of controlling the operation of a handheld wireless communication apparatus is thus obtained.

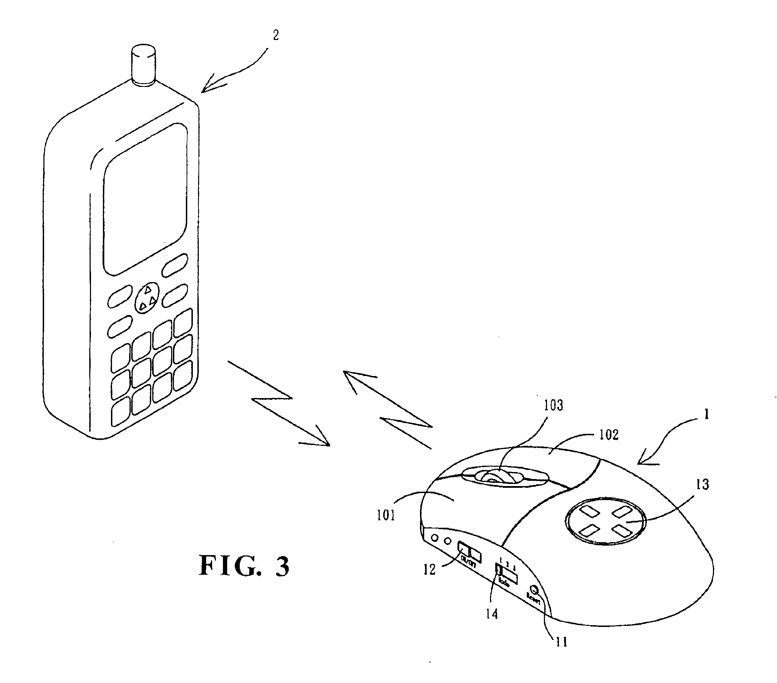

FIG. 3 shows an application example of the wireless mouse. According to this embodiment, the handheld wireless communication apparatus 2 to be controlled by the wireless mouse 1 is a cell phone. After installation of a new battery set, the power switch 13 is switched on to start the circuit. At this time, the light emitting device 181 is turned on to emit light. When the light from the light emitting device 181 encounters an obstacle at the bottom side of the wireless mouse 1, it is reflected by the obstacle, and the reflected light is focused by the image-focusing optical device into a bright light beam onto the optical induction module 18, causing the optical induction module 18 to send a signal to the program-controlled microprocessor 17 subject to the spectral distribution at the photosensor of the optical induction module 18 for calculation of the direction and amount of movement of the wireless mouse 1. The calculated data is added with a predetermined signal format ID (identification) code, and then inputted into the input of the transmitting terminal of the 2.4GHz wireless transmission module 16 for enabling the 2.4GHz wireless transmission module 16 to transmit the data signal with a carrier frequency subject to 2.4GHz carrier frequency communication protocol for receiving by the handheld wireless communication apparatus 2. Thus, by means of the wireless mouse 1 to transmit different control signals, the display content on the display screen of the handheld wireless communication apparatus 2 is intendedly changed.

The light emitting device 181 at the bottom side of the wireless mouse 1 becomes dark a predetermined period after immovability of the body of the wireless mouse 1, and will become full brightness immediately when the wireless mouse 1 is moved again. Similarly, the 2.4GHz wireless transmission module 16 only transmits a communication code at a predetermined time interval when the wireless mouse 1 stands still, and will intensively transmit radio frequency only when a signal is available. Therefore, the wireless mouse 1 saves the consumption of the limited power capacity of the battery set 191 for a long time of use.

The buttons on the outside of the wireless mouse 1 are described hereinafter.

The left button 101, the right button 102 and the roller/button 103 are same as the like buttons of a conventional optical mouse for file execution, inquiry and scroll function controls.

The reset button 11 is to reset communication between the wireless mouse 1 and the controlled handheld wireless communication apparatus 2. When the connection between the wireless mouse 1 and the controlled handheld wireless communication apparatus 2 is off, the user can press the reset button 11 to drive the wireless transmission module, causing the wireless transmission module to scan the whole communication frequency band for the establishment of connection between the wireless mouse 1 and the controlled handheld wireless communication apparatus 2 again.

The mode selector switch 14 is to set the circuit to work under different operating systems.

The function of the quick launch button 15 is same as the left button 101. It is for execution of the selected option, or weapon triggering control during playing of a video game. The function of the quick launch button 15 is disposed on the middle at the front side of the wireless mouse 1 so that a left-hand user as well as a right-hand user can operate the function of the quick launch button 15 conveniently.

Further, the joystick button 13 is mounted in a circular recess on the outside wall of the wireless mouse 1 for directional control without moving the body of the wireless mouse 1. By means of pressing the directional buttons of the joystick button 13 without moving the body of the wireless mouse 1, the cursor on the screen of the controlled handheld wireless communication apparatus 2 is moved to the predetermined position. Therefore, the joystick button 13 enables the wireless mouse 1 to provide a game joystick function.

Although a particular embodiment of the invention has been described in detail for purposes of illustration, various modifications and enhancements may be made without departing from the spirit and scope of the invention. Accordingly, the invention is not to be limited except as by the appended claims as interpreted by the description and drawings.

## Claims

1. A wireless mouse for controlling the operation of a handheld wireless communication apparatus, comprising on the outside thereof:
a left button and a right button arranged in .parallel;
a roller/button for quick image change control of the controlled handheld wireless communication apparatus; and
an optical device installed in a bottom side of the wireless mouse for image focusing; and
on the inside thereof:
a 2.4GHz wireless transmission module, said 2.4GHz wireless transmission module comprising a match password for two-way communication to prevent eavesdropping and a data-encoded specific serial format radio wave;
an optical induction module and a light emitting device, said optical induction module being adapted to process message of light emitted by said light emitting device and reflected light by an external object and focused by said optical device;
a power management circuit and a battery set for providing the wireless mouse with a stable working power; and
a microprocessor electrically coupled to said left button, said right button, said roller/button, said optical induction module, said light emitting device, said power management circuit and
said battery set and adapted to control the operation of the connected devices for enabling the wireless mouse to be moved on a support surface in all directions by a user to cause said optical induction module to generate corresponding control signals indicative of the direction and amount of movement of the wireless mouse for transmission through said wireless transmission module to the controlled handheld wireless communication apparatus wirelessly.

2. The wireless mouse as claimed in claim 1, further comprising on the outside thereof a reset button electrically connected to said microprocessor for resetting wireless connection between the wireless mouse and the controlled handheld wireless communication apparatus.

3. The wireless mouse as claimed in claim 1 or 2, further comprising on the outside thereof a power switch electrically connected to said microprocessor for control power on/off of the wireless mouse.

4. The wireless mouse as claimed in claim 1, 2 or 3, further comprising on the outside thereof a joystick button electrically connected to said microprocessor for controlling said 2.4GHz wireless transmission module to transmit different directional control signals wirelessly.

5. The wireless mouse as claimed in any one of claims 1 to 4, further comprising on the outside thereof a mode selector switch electrically connected to said microprocessor for enabling the wireless mouse to be compatible to different operating systems.

6. The wireless mouse as claimed in any one of claims 1 to 5, further comprising on the outside thereof a quick launch button electrically connected to said microprocessor for execution of the selected option and for weapon triggering control during playing of a video game through the controlled handheld wireless communication apparatus, said quick launch button being disposed on a middle part of a front side of the wireless mouse.

7. The wireless mouse as claimed in any one of claims 1 to 6 wherein said light emitting device is a light emitting diode within the range of visible spectrum.

8. A wireless mouse capable of controlling the operation of a handheld wireless communication apparatus, which mouse comprises a joystick button, wherein the mouse can be moved on a support surface in all directions by the user, or operated with fingers using the joystick button after separation of the mouse from the support surface, to control operation of the handheld wireless communication apparatus.
